# EUROPEAN PATENT APPLICATION

(11) **EP 4 744 811 A1**
(43) Date of publication of application: **20.05.2026**
(21) Application number: 24219648.3
(22) Date of filing: 13.12.2024
(51) Int. Cl.: B23K 26/046, B23K 26/06, B23K 26/082

(54) **DYNAMICAL ZOOMING AND FOCUSING IN A LASER PROCESSING APPARATUS**

(30) Priority: 13.11.2024 EP 24212609
(71) Applicant: Raylase GmbH, 82234 Wessling (DE)
(72) Inventor: Lehmann, Wolfgang, 82110 Germering (DE); Reimann, Thomas, 82110 Germering (DE)
(74) Representative: Araujo Edo, Mario

(57) **Abstract**

The invention refers to a laser processing apparatus (10) comprising an optical system with a beam width regulation optical group (20) for adjusting a beam width of a laser beam (B) and a focusing optical group (30) with adjustable focal length, wherein the focusing optical group (30) is arranged along a beam path of the laser beam (B) between the beam width regulation optical group (20) and the laser output (14); wherein the optical system is configured for adjusting a focal position of the laser beam and a spot size corresponding to a beam width of the laser beam at said focal position (F). The beam width regulation optical group (20) is configured for causing a variation of an absolute value of a beam propagation angle of the laser beam (B) not more than 10°; and/or such that a ratio of a distance from the beam width regulation optical system to focusing optical system along an optical path of the laser beam over a Rayleigh length of the laser beam measured downstream from the beam width regulation optical group is not more than 60. The invention further refers to a related method of operating a laser processing apparatus (10) for laser-processing a workpiece (P).

## Description

### FIELD OF THE INVENTION

The present invention is in the field of laser processing and relates to a laser processing apparatus and a related method.

### BACKGROUND OF THE INVENTION

In the field of laser processing, it is common to employ laser beams for a variety of applications, including cutting, welding, engraving, and additive manufacturing. Known systems typically involve the use of optical components to direct and focus the laser beam onto a workpiece. These systems often require manual adjustments to change the beam width or focal position, which can be time-consuming and prone to inaccuracies. Additionally, the integration of multiple laser beams with different properties, such as varying wavelengths or beam intensity profiles or beam shapes, into a single processing apparatus presents significant challenges in terms of alignment and control.

According to known approaches, laser processing systems often lack the ability to simultaneously and/or independently adjust in real-time the focal position and its corresponding spot size, with the latter typically being limited by the former. This limitation can result in suboptimal processing conditions, leading to reduced precision and efficiency. For instance, in laser welding or cutting processes, the inability to fine-tune the beam parameters on-the-fly can cause defects in the workpiece or inefficient material removal. Furthermore, existing systems may struggle to maintain consistent beam quality when switching between different operational modes or when processing materials with varying properties.

Despite the substantial advances in the field of laser processing, there remains a need for improved systems that offer greater control over the laser beam parameters. Specifically, there is a demand for apparatuses that can seamlessly adjust the beam width and focal position without manual intervention, thereby enhancing processing accuracy and efficiency. Additionally, there is a need for systems capable of handling multiple laser beams with different characteristics, ensuring precise alignment and optimal performance across various applications.

A laser processing apparatus is known from EP 3 838 472 A1, which is capable of adjusting a beam spot size or beam width of a laser beam while keeping constant a focal position of the laser beam. For this purpose, the laser processing apparatus comprises a focusing device with at least two movable lenses and possibly at least one fix lens. A drawback of this laser processing apparatus is that a maximal beam width that may be admitted into the apparatus, for example for a collimated laser beam, is limited and so is a maximal beam width increase that may be implemented with this laser processing apparatus while keeping constant the focal position of the laser beam. An optimal use of this apparatus may hence require a strongly divergent input laser beam, which can preclude the usage of one or multiple collimated laser sources, at least in optimal working conditions. Accordingly, this laser processing apparatus may have limited compatibility with the use of beam adjusting elements, like beam shapers, such as diffractive optical elements.

US 2005/0150876 A1 discloses a laser welding robot including a device for focusing and orienting a laser beam. The device comprises a first optical group including first axially movable lenses configured for collimating a divergent input laser beam and a second optical group including a movable lens for transforming the collimated beam into a divergent beam that is focused by a fixed focusing modulus. A coordinated control of the axial positions of the movable lenses of the first and second optical groups allows adapting the focus distance of the laser beam on a structure to weld.

It is therefore a technical problem underlying the present invention to provide a laser processing apparatus that at least partially overcomes the disadvantages of known systems.

### SUMMARY OF THE INVENTION

It is an object of this invention to provide a laser processing apparatus and a related method that overcome one or more of the previously described disadvantages of known systems, in particular by providing a more accurate and more dynamical way of adapting focal position and beam width, in particular spot size, of a processing laser beam, while obtaining maximal flexibility as to the conditions of a laser beam inputted into the apparatus. This is achieved by a laser processing apparatus according to claim 1 and by a method according to claim 10. Preferred embodiments of the invention are defined in the appended dependent claims.

A first aspect of the invention refers to a laser processing apparatus as defined in claim 1, which may be configured for laser-processing a workpiece, wherein laser-processing may refer herein to any process in which laser light is used for modifying the properties of a workpiece or material, including for example 3d-printing, welding, cutting, marking, graving, etc. The laser processing apparatus may in particular be suitable for laser-processing a workpiece in a laser powder bed fusion process, or for welding parts in a laser welding process, in particular for welding battery cells and/or bipolar plates for combustible cells.

The laser processing apparatus comprises a laser input for receiving a laser beam, optionally a collimated laser beam, and a laser output for outputting the laser beam. The laser input may comprise one or more of a glass window, an aperture, and an optical fiber connector and may possibly include a collimation system, for example one or more collimation lenses. In preferred embodiments, the laser input may be free of any optical fiber connector and/or may preferably be configured as an aperture, which may allow inputting a laser beam having any beam shape. The laser output may comprise one or more glass windows and/or one or more apertures. The laser processing apparatus may comprise a housing enclosing other components of the laser processing apparatus, possibly all of them, and the laser input and the laser output may be formed through the housing.

The laser input may be configured for receiving a collimated laser beam for inputting said collimated laser beam into the laser processing apparatus. Accordingly, the laser input may be free of any focusing lens and/or free of any collimation optical system, unlike other types of laser input that are typically used for receiving divergent or convergent, laser beams. The laser input may have an aperture in a range of 5 mm to 50 mm.

The laser beam is inputted into the laser processing apparatus through the laser input and is outputted of the laser processing apparatus through the laser output. Thus, a beam path of the laser beam is defined in the laser processing apparatus between the laser input and the laser output. It is also possible that more than one laser beams may be inputted into the laser processing apparatus through respective laser inputs. The laser beams may then copropagate and/or overlap in the laser processing apparatus and may all be outputted through the laser output.

The laser processing apparatus comprises an optical system defined for the laser beam between the laser input and the laser output. Thus, the laser beam is transmitted between the laser input and the laser output through the optical system.

The optical system of the laser processing apparatus comprises a beam width regulation optical group and a focusing optical group. The beam width regulation optical group is configured for adjusting a beam width of the laser beam.

The beam width regulation optical group may adjust the beam width of the laser beam while keeping substantially constant a collimation of the laser beam. "Collimation" may refer herein to a collimation state of the laser beam inputted into the optical system through the laser input, which is not substantially modified by the beam width regulation optical group and may in particular be kept constant. The laser beam may be collimated, slightly divergent or slightly convergent when accessing the beam width regulation optical group. Keeping the collimation of the laser beam means that the laser beam may also be collimated, slightly convergent or slightly divergent, respectively, when exiting the laser beam width regulation optical group. Possibly, the beam width regulation optical group may keep constant a collimation of the laser beam, such that, for example, if the laser beam is collimated when accessing the beam width regulation optical group, it is also collimated when exiting the laser beam width regulation optical group. However, the beam width regulation optical group may also be considered to keep constant a collimation of the laser beam, if, for example, the laser beam is collimated when accessing the beam width regulation optical group and is slightly convergent or slightly divergent when exiting the laser beam width regulation optical group. Likewise, the beam width regulation optical group may also be considered to keep constant a collimation of the laser beam, if, for example, the laser beam is slightly diverging when accessing the beam width regulation optical group and is slightly convergent when exiting the laser beam width regulation optical group.

"Slightly" divergent or convergent may refer herein to a divergence or convergence angle of the laser beam, possibly measured between the beam width regulation optical group and the focusing optical group, respectively, of not more than 10°, possibly not more than 6°, more possibly not more than 3°.

In other words, the beam width regulation optical group may be configured for avoiding, i.e., for not causing, a substantial variation of the collimation, divergence and/or convergence of the laser beam. In particular, the beam width regulation optical group may be configured for causing a variation of an absolute value of a beam propagation angle of the laser beam not more than 10°, possibly not more than 6°, more possibly not more than 3°, possibly 0°. "Beam propagation angle" may refer herein to a convergence angle, for a convergent beam, and for a divergence angle, for a divergent beam. A collimated beam can be considered to have a beam propagation angle 0°.

Thus, for example, if the laser beam B, when reaching the beam width regulation optical group, has a beam propagation angle of 0°, meaning that the laser beam B is collimated, the laser beam B, when exiting the beam width regulation optical group, can be a convergent angle with a convergence angle not more than 10°. As a further example, if the laser beam B, when reaching the beam width regulation optical group, has a divergence angle of 5°, meaning that the laser beam B is slightly divergent, the laser beam B, when exiting the beam width regulation optical group, can be a convergent angle with a convergence angle, for example, between o° and 15°, i.e. with an absolute value not deviating more than 10° from 5°.

"Divergence angle" may refer herein to an angle between diverging light rays of a light beam and the optical axis of the laser beam, as the laser rays advance along their beam path toward a focal point of the laser beam. Geometrically, the divergence angle may be measured as twice the angle between the optical axis and a maximally diverging ray of the laser beam. A larger divergence angle thus correlates with a smaller spot size at the focal point, while a smaller divergence angle correlates with a larger spot size at the focal point. Likewise, "convergence angle" may refer herein to an angle between converging light rays of a light beam and the optical axis of the light beam, as the laser rays advance along their beam path toward a focal point of the laser beam. Geometrically, the convergence angle may be measured as twice the angle between the optical axis and a maximally converging ray. A larger convergence angle thus correlates with a smaller beam width incident on the focusing optical group and hence with a larger spot size at the focal point, while a smaller convergence angle correlates with a larger beam width incident on the focusing optical group and hence with a smaller spot size at the focal point.

Additionally or alternatively, the beam width regulation optical group may be configured for adjusting the beam width of the laser beam such that a ratio of a distance from the beam width regulation optical system to a focusing optical system to be described below, for example between a lens of the beam width regulation optical group arranged most downstream and a lens of the focusing optical group arranged most upstream, over a Rayleigh length of the laser beam measured downstream from the beam width regulation optical group, in particular downstream from the beam width regulation optical group and upstream from the focusing optical group, is not more than 1000, possibly not more than 60, possibly not more than 30, also possibly not more than 10. "Distance" may refer herein to a geometric distance in Euclidean sense.

The "Rayleigh length" of a laser beam is an optical parameter defined as a distance from the so-called beam waist (the position along the optical path of the laser beam at which the laser beam reaches a minimal beam width) to the point where the beam's cross-sectional area has doubled. The beam may be considered to begin diverging more significantly beyond this distance. For example, for a Gaussian beam, the Rayleigh length, zR, is defined as zR=(π·ω²)/ λ, wherein ω stands for the beam radius (i.e. half the beam width) at the beam waist and λ is the wavelength of the laser beam. The skilled person knows how to adapt this mathematical expression, if needed, for a laser beam comprising more than one single wavelength, for example a wavelength range.

For example, a laser beam inputted into the laser processing apparatus with a wavelength of 1050 nm and a beam waist of 12 mm, the Rayleigh length is 430,85 m, which indicates that the laser beam can be considered to start diverging notably after an optical distance of 430,85 m. According to this example, and considering a distance from the beam width regulation optical system to the focusing optical system of, for example, 25 mm, the beam width regulation optical system may be configured, according to the invention, for keeping the Rayleigh length, measured downstream from the beam width regulation optical system, over 0,025 mm, preferably over 0,417 mm, more preferably over 0,83 mm.

According to another example, if the same laser beam is inputted into the laser processing apparatus with a wavelength of 1050 nm and a beam waist of 12 mm, and considering a distance from the beam width regulation optical system to the focusing optical system of, for example, 75 mm, the beam width regulation optical system may be configured, according to the invention, for keeping the Rayleigh length, measured downstream from the beam width regulation optical system, over 0,075 mm, preferably over 1,25 mm, more preferably over 2,5 mm.

Notably, the "Rayleigh length" is a parameter defined both for convergent and for divergent laser beams. For a laser beam that converges to a focal point (beam waist), the Rayleigh length is the distance from this beam waist to the point where the beam's cross-sectional area doubles due to divergence. Beyond this Rayleigh length, the beam continues to diverge, but at a more pronounced rate. In a diverging beam (for example, a beam that has already passed through a focus), the Rayleigh length similarly represents the distance from the beam waist (where it was most tightly focused) to the point where the cross-sectional area has doubled due to continued spreading.

Thus, the beam width regulation optical group may optionally be configured for at least one of:
- causing a variation of an absolute value of a beam propagation angle of the laser beam not more than 10°, possibly not more than 6°, more possibly not more than 3°; and
- such that a ratio of a distance from the beam width regulation optical system to focusing optical system along an optical path of the laser beam over a Rayleigh length of the laser beam measured downstream from the beam width regulation optical group, in particular downstream from the beam width regulation optical group and upstream from the focusing optical system, is not more than 1000, possibly not more than 60, possibly not more than 30.

Said optical distance from the beam width regulation optical system to the focusing optical group may in particular be a distance from an optical component of the beam width regulation optical group arranged most downstream, i.e. closest to the focusing optical group, which can for example be a fixed lens of the beam width regulation optical group, to an optical component of the focusing optical group arranged most upstream, i.e. closest to the beam width regulation optical group, which can for example be a movable lens of the focusing optical group.

By adjusting the beam width of the laser beam by the beam width regulation optical group, the beam width of the laser beam downstream from the beam width regulation optical group can be controlled. For this purpose, the beam width regulation optical group comprises at least two lenses, the at least two lenses comprising at least one movable lens, for adjusting a convergence or divergence of the laser beam.

As used herein "upstream" and "downstream" may be referred to a direction of the laser beam defined from the laser input towards the laser output. If an element A is said to be upstream from an element B, this may indicate that A is closer to the corresponding laser input than B when following the path of the laser beam. Likewise, if an element C is said to be downstream from the element V, this may indicate that C is closer to the laser output than B along the path of the laser beam.

The at least two lenses of the beam width regulation optical group may further comprise at least one fix (non-movable) lens. For example, the beam width regulation optical group may comprise a movable lens and a fix lens, the movable lens being arranged upstream from the fix lens along the beam path of the laser beam(s). The convergence or divergence of the laser beam, and possibly of any other laser beams inputted into the laser processing apparatus, may be adjusted by correspondingly moving, in particular shifting along the propagation direction the laser beam, that is, along the optical axis, the at least one movable lens of the beam width regulation optical group. The at least one movable lens of the beam width regulation optical group may possibly be a convergent lens and may possibly be of greater size (e.g. greater diameter) than at least one of the other at least two lenses of the beam width regulation optical group, for example than the at least one fix (non-movable) lens.

"Beam width" may refer herein to a width or diameter of the laser beam in a plane perpendicular to a propagation direction of the laser beam, i.e. to a cross-section of the laser beam. Since laser beams typically do not have sharp edges, the beam width, as used herein, may refer to a beam width or beam diameter defined according to any of the definitions known to a person skilled in the art, including D4σ, 10/90 or 20/80 knife-edge, 1/e2, FWHM, and D86. For cases in which the laser beam may have a non-circular cross-section, the "beam width" may be defined with respect to a major or minor axis of the cross-section of the laser beam.

The "beam width" determined by the beam width regulation optical group influences a spot size or focus diameter, i.e. a beam width of the laser beam at a focus thereof. The spot size may also be understood as a minimal beam width or minimal beam waist of the laser beam, corresponding to a position along the optical path of the laser beam in which the focus of the laser beam is located.

Thus, the beam width regulation optical group can adjust the beam width of the laser beam and thereby controllably affect the beam width of the laser beam at any position along the optical path of the laser beam located downstream from the beam width regulation optical group, in particular between the beam width regulation optical group and the focusing optical group and/or at said position along the optical path of the laser beam in which the focus of the laser beam is located.

"Beam shape", as used herein, may refer to the shape of the cross-section of the laser beam, possibly of an intensity profile thereof. The beam shape may for example be circular, elliptical, cross-shaped or polygonal or may correspond to a superposition of multiple circles or multiple ellipses. "Beam intensity profile" may refer herein to a spatial distribution of laser intensity across the cross-section of the laser beam. For example, the beam intensity profile of a laser beam, possibly having a circular cross-section, may follow a Gaussian distribution, with a centered peak and a gaussian decrease towards the periphery of the cross-section of the laser beam.

The beam width regulation optical group may be configured for adjusting the beam width of a collimated, or at most slightly divergent or slightly convergent, laser beam without substantially affecting the collimation. This means that, while the beam width of the laser beam after passing the beam width regulation optical group may be varied with respect to the beam width before reaching the beam width regulation optical group, the laser beam may continue to be collimated, or at most slightly divergent or slightly convergent, after passing the beam width regulation optical group. Thus, the laser beam may be collimated, or at most slightly divergent or slightly convergent, both directly upstream and directly downstream from the beam width regulation optical group, while having different beam widths and possibly different divergence angles.

The laser processing apparatus further comprises a focusing optical group with adjustable focal length. The focusing optical group is arranged along a beam path of the laser beam between the beam width regulation optical group and the laser output. The focusing optical group comprises at least two lenses, the at least two lenses comprising at least one movable lens.

The focusing optical group may, by adjusting its focal length, adjust a focal length of the optical system of the laser processing apparatus as a whole, i.e. an "effective focal length" thereof, taking into account the beam width regulation optical group, the focusing optical group and possibly any other optical group or component of the laser processing apparatus contributing to determining an overall focal length thereof. By adjusting the focal length of the optical system of the laser processing apparatus, the focusing optical group can determine a focal position of the laser beam outputted through the laser output, and of any other laser beam coming from the beam width regulation optical group. Thus, the focusing optical group may set a focal position of the laser beam(s), for example on a work field and/or a workpiece to be laser-processed.

The at least two lenses of the focusing optical group may further comprise at least one fix (non-movable) lens. For example, focusing optical group may comprise a movable lens and a fix lens, the movable lens being arranged upstream from the fix lens along the beam path of the laser beam(s). The focal position of the laser beam, and possibly of any other laser beams inputted into the laser processing apparatus, may hence be adjusted by correspondingly moving, in particular shifting, the at least one movable lens of the focusing optical group. The at least one movable lens of the focusing optical group may possibly be a divergent lens and may possibly be of smaller size (e.g. smaller diameter) than at least one of the other at least two lenses of the focusing optical group, for example than the at least one fix (non-movable) lens.

The at least two lenses of the focusing optical group and the at least two lenses of the beam width regulation optical group may be different lenses. Thus, the laser processing apparatus of the invention may comprise at least four lenses, wherein at least two lenses of the at least four lenses may correspond to the beam width regulation optical group and at least two other lenses of the at least four lenses may correspond to the focusing optical group.

Each of the beam width regulation optical group and the focusing optical group may comprise a corresponding motor system for driving a movement of the respective at least one movable lens. A motor system of the beam width regulation optical group for driving a movement of the at least one movable lens thereof may be different from a motor system of the focusing optical group for driving a movement of the at least one movable lens thereof. The motor system of the beam width regulation optical group and the motor system of the focusing optical group may be operated independently of each other and/or may be controlled by an independent control unit or control module. For example, the motor system of the beam width regulation optical group may be controlled by a first control module and the motor system of the focusing optical group may be controlled by a second control module.

The optical system of the laser processing apparatus of the invention is configured for adjusting a focal position of the laser beam and a spot size corresponding to a beam width of the laser beam at said focal position, possibly simultaneously or independently. By virtue of the combined and coordinated action of the beam width regulation optical group and the focusing optical group, the laser processing apparatus can hence set the focal position and/or the spot size of the laser.

If the focal position and the laser beam are adjusted simultaneously, this may imply that the beam width regulation optical group and the focusing optical group may be operated such that both the focal position and the laser beam are varied at the same time. For example, the focal position of the laser beam may be shifted while the spot size is increased.

If the focal position and the laser beam are adjusted independently, this may imply that the beam width regulation optical group and the focusing optical group may be operated such that one of the focal position or the laser beam is varied while the other one of the focal position and the laser beam is kept constant. For example, the focal position of the laser beam may be kept constant while the spot size is increased or decreased or the spot size may be kept constant while the focal position is shifted.

The optical system may be operated for keeping a focal position of the laser beam constant or on a target plane, such as a work field of the laser processing apparatus or a surface of a workpiece being laser-processed, while varying or while keeping constant a spot size of the laser beam. Further, the optical system may be operated for keeping a spot size of the laser beam constant while modifying a focal position of the laser beam, for example when changing target plane or when directing the laser beam to different positions on the work field.

The beam width regulation optical group can be thought of as a telescope optical system configured for providing an adjustable zoom or magnification when operating in combination with the focusing optical group, which is able to adjust the effective focal length of the entire optical system, wherein adjusting the beam width is tantamount to adjusting the zoom provided by the telescope system.

The focusing optical group can be thought of as a so-called objective optical system configured for controlling a focal length of the optical system of the laser processing apparatus, possibly such that, a focus position of the laser beam(s) is shifted or kept constant. The focusing optical group may alter a convergence or divergence of the laser beam to shift a position of a focal point thereof. For this purpose, the focusing optical group may adjust the positions of the at least one movable lens thereof so as to correspondingly adjust an effective focal length of the focusing optical group. Thereby, the focal position of the laser beam can be dynamically adjusted to achieve precise focusing on the workpiece to be laser-processed and/or on the work field.

Thus, thanks to the combination of the beam width regulation optical group with the focusing optical group, the laser processing apparatus of the invention can implement a highly dynamical zoom-in or zoom-out function, i.e. an adjustment of the beam width, while allowing to adjust the focal length of the optical system of the laser processing apparatus, in particular, if desired, for keeping the focal position of the laser beam during or constant after a variation of the beam width (spot size) or for keeping the beam width (spot size) constant during or after a variation of the focal position.

In general, any variation of the beam width or spot size of a laser beam may trigger a shift of the effective focal length of the laser processing apparatus and hence a shift of the focal position of the laser beam. Thus, in general, if the beam width of the laser beam is adjusted or if a laser beam with different beam width is inputted through the laser input, the focus position of the laser beam will vary in a non-controlled, possibly undesired manner. In the laser processing apparatus of the invention, the combination of the beam width regulation optical group and the focusing optical group allows readjusting the focal length of the optical system of the laser processing apparatus if necessary, for example to keep it the focal position at the position it was before the variation of the beam width or spot size. Thus, it is for example possible, with the laser processing apparatus of the invention, to increase or decrease the spot size while keeping constant the focal position of the laser beam.

Likewise, in general, any variation of the focal position of a laser beam may trigger a corresponding variation of the spot size thereof. Thus, in general, if the focal position of the laser beam is adjusted, for example during a plane field compensation when directing the laser beam to different positions on a planar work field so as to keep the focus on the planar work field, the spot size may vary in a non-controlled, possibly undesired manner. In the laser processing apparatus of the invention, the combination of the beam width regulation optical group and the focusing optical group allows readjusting the spot size of the laser beam if needed to keep it constant, i.e. with the same beam width at the focal position the laser beam had before the variation of the focal position.

Further, the configuration according to the invention may allow preserving a beam shape and a beam intensity profile of the laser beam downstream from the laser processing apparatus, i.e. after adjusting the beam width and the focus position.

As a result, the laser processing apparatus of the invention provides an increased operational flexibility over previously known solutions that implement a variable spot size with constant focal position, such as the solutions known from each of EP 3 838 472 A1 and US 2005/0150876 A1. As compared to those solutions, the laser processing apparatus of the invention can flexibly operate with a broader range of beam widths, in particular when inputting a laser beam that fulfils at least one of the two conditions defined above for the adjustment of the beam width of the laser beam by the beam width of the at least one laser beam, for example when the laser beam is collimated, slightly convergent or slightly divergent, and also a broader range of beam shapes and beam intensity profiles of the laser beam being inputted through the laser input.

According to preferred embodiments, the laser processing apparatus may further comprise a first control module configured for controlling a movement of the last least one movable lens of the beam width regulation optical group and a movement of the at least one movable lens of the focusing optical group for varying the spot size of the laser beam while keeping constant the focal position of the laser beam.

Additionally or alternatively, the laser processing apparatus may comprise a second control module configured for controlling a movement of the last least one movable lens of the beam width regulation optical group and a movement of the at least one movable lens of the focusing optical group for varying the focal position of the laser beam while keeping constant the spot size of the laser beam.

The first control module and/or the second control module may be specifically configured to perform adjustments of the spot size, i.e. of the beam width of the laser beam at a focal position thereof. This may in particular imply that, when adjusting the beam width, the target parameter tracked by the first control module and/or the second control module, possibly with use of a corresponding optical monitoring system, may be the spot size or focus diameter of the laser beam.

The possibly combined functionalities of the first and second control modules may provide enhanced flexibility and precision in laser processing with the laser processing apparatus of the invention. The ability to flexibly adjust the spot size and the effective focal length of the laser processing apparatus may be beneficial for various laser processing applications. For instance, in applications requiring a constant spot size (beam width at the focal position), for example for welding purposes, the laser processing apparatus may maintain the spot size constant while adjusting the focal position of the laser beam (via adjustment of the focal length of the laser processing module) as needed, for example as a function of a deflection angle while scanning a planar work field so as to compensate variations in the beam path distance to the work field or workpiece, which increase for increasing deflection angles. Similarly, for other applications, it may be desired to keep the focal position constant while adjusting the beam width.

Notably, the solution disclosed in EP 3 838 472 A1 is based on the use of a focusing optical group with at least two movable lenses and not on the combination of a beam width regulation optical group with at least one movable lens and a focusing optical group with at least one movable lens according to the present invention, which may be independently controllable and operable. As a result, the solution disclosed in EP 3 838 472 A1 may offer the possibility of adjusting a beam spot size or beam width of a laser beam while keeping constant a focal position of the laser beam for a limited range of beam widths of a laser beam inputted into the corresponding laser input, whereas the laser processing apparatus of the present invention offers the possibility of adjusting a beam spot size or beam width of a laser beam while keeping constant a focal position for a much broader range of beam widths of a laser beam inputted into the corresponding laser input.

According to preferred embodiments, the laser processing apparatus may further comprise a third control module for controlling a movement of the last least one movable lens of the beam width regulation optical group for adjusting the beam width of the laser beam, in particular measured at a position along an optical path of the laser beam between the beam width regulation optical group and the focusing optical group, possibly measured at an optical element (e.g. a lens) of the focusing optical group arranged most upstream, i.e. when the laser beam is incident on a first optical surface of the focusing optical group, to correspond to a target value associated to the focusing optical group. For this purpose, the second control module may receive, for instance from a user interface or a pre-programmed set of instructions, or detect, for example automatically, a setting of the focusing optical group, for example a target focal position of the laser beam and/or a position of one of the at least one movable lenses of the focusing optical group, and determine, based thereon, the target value of the beam width imposed by said setting of the focusing optical group. The second control module may then correspondingly control the last least one movable lens of the beam width regulation optical group for adjusting the beam width of the laser beam corresponding to such target value, which may in particular correspond to a target value of the beam width of the laser beam when entering the focusing optical group. This may in particular imply that, when adjusting the beam width, the target parameter tracked by the second control module, possibly with use of a corresponding optical monitoring system, may be the beam width of the laser beam at said position along the optical path of the laser beam between the beam width regulation optical group and the focusing optical group.

Each of the first control module, the second control module, and the third control module, which may be separated modules or functional components of one and the same module, may be hardware-implemented or software-implemented. For example, in some embodiments, the first control module, the second control module, and the third control module may be independent pieces of hardware, while in other embodiments, the first control module, the second control module, and the third control module may be software-modules implemented by one control processing unit.

In preferred embodiments, the laser processing apparatus may comprise a scanning unit for for scanning the laser beam across a work field in two dimensions. The scanning unit may comprise an XY pair of movable mirrors for scanning the laser beam, including corresponding galvanometers. The scanning unit may preferably be arranged along the beam path of the laser beam downstream from the beam width regulation optical group and the focusing optical group. In other words, the laser processing apparatus of the invention may be a pre-focusing apparatus in which the laser beam is focused by the focusing optical group before it is deflected by the scanning unit.

In preferred embodiments, the laser processing apparatus may comprise at least one collimation optical system for collimating the laser beam upstream from the beam width regulation optical group, possibly upstream form the laser input. Thus, the at least one collimation optical system, which may be partly or totally arranged upstream from the beam width regulation optical group and possibly also from the laser input, may ensure that the laser beam reaching the beam width regulation optical group and the focusing optical group is a collimated laser beam.

According to preferred embodiments, the laser processing apparatus may further comprise at least one beam adjusting element, preferably at least one diffractive optical element, for adjusting a beam shape and/or a beam intensity profile of the laser beam upstream from the beam width regulation optical group, possibly upstream form the laser input. The at least one collimation optical system, which may be partly or totally arranged upstream from the beam width regulation optical group and possibly also from the corresponding laser input, may ensure that the laser beam reaching the beam width regulation optical group and the focusing optical group has a required beam shape and/or a required beam intensity profile.

In preferred embodiments, the laser processing apparatus may further comprise at least one dichroic element arranged upstream of the beam width regulation optical group, wherein the at least one dichroic element may be at least partly transparent for a first laser beam inputted into the laser processing apparatus through a first laser input and outputted of the laser processing apparatus through the laser output and may be at least partly reflective for a second laser beam inputted into the laser processing apparatus through a second laser input and outputted of the laser processing apparatus through the laser output. The skilled person will understand that the number of laser inputs and laser beams inputted into the laser processing apparatus of the invention may be greater than two.

In such embodiments, the previously described at least one collimation optical system and the previously described at least one beam adjusting element may each be arranged in the beam path of a corresponding one of the laser beams inputted into the laser processing apparatus with the possibility that the at least one collimation optical system and the at least one beam adjusting element may be differently or equally configured for different laser beams.

The first laser beam and the second laser beam may fulfil at least one of the following conditions or a combination thereof, possibly referred specifically to the properties of the corresponding laser beam when being inputted into the laser processing apparatus or when reaching the beam width regulation optical group:
- the first laser beam and the second laser beam have different beam widths;
- the first laser beam and the second laser beam have different wavelength ranges;
- the first laser beam and the second laser beam have different beam shapes;
- the first laser beam and the second laser beam have different intensity profiles;
- the first laser beam and/or the second laser beam is or comprises a single-mode laser beam, preferably obtained from a central fiber core of a coaxial optical fiber;
- the first laser beam and/or the second laser beam is or comprises a preferably ringshaped multi-mode laser beam, preferably obtained from a peripheral fiber-ring of a coaxial optical fiber.

Having more than one laser beam inputted into the laser processing apparatus through corresponding more than one laser inputs may hence allow flexibly overlapping laser beams with different properties. For example, the first and second laser beams may have different beam widths to allow effectively increasing a zoom-range or magnification range achievable by the beam width regulation optical group. As a further example, the first and second laser beams may have different wavelength ranges, such that the first laser beam can for example be used for laser processing while the second laser beam is used for on-axis illumination or for optical monitoring purposes or for a different type of laser processing. Advantageously, the laser widths and the focal position of all laser beams inputted into the system can be adjusted by the beam width regulation optical group and by the focusing optical group, possibly simultaneously.

The optical properties, in particular the focal lengths and relative positions, of the lenses included in the beam width regulation optical group may be adapted for the functionality of the beam width regulation optical group. Preferably, the lenses of the beam width regulation optical group may be chosen such that they are in accordance with a beam width of the laser beam inputted through the laser input. A ratio of the beam width of the laser beam inputted through the laser input to the maximum beam width that compatible with the focusing optical group may determine the required focal lengths of the at least two lenses of the beam width regulation optical group and their respective distance to one another in a way that is accessible to the skilled person.

The optical properties, in particular the focal lengths and relative positions, of the lenses included in the focusing optical group may be adapted for the functionality of the focusing optical group. Preferably, given a maximum beam width of the optical system of the laser processing apparatus, which may be determined by a diameter of a smallest lens or mirror in the optical system, the required focal lengths and positions of the at least two lenses of the focusing optical group can be derived from a desired optical distance to a focal plane, for example to the work field or to the workpiece in a way that is accessible to the skilled person.

A further aspect of the invention refers to a method of operating a laser processing apparatus, which is in particular be a laser processing apparatus according to any of the embodiments of the first aspect of the invention described above, for laser-processing a workpiece. The method comprisesinputting at least one laser beam into the laser processing apparatus through at least one laser input thereof and outputting the at least one laser beam through a laser output of the laser processing apparatus.

Further, the method comprises:
- operating the beam width regulation optical group of the laser processing apparatus for adjusting a beam width, possibly in particular the spot size (i.e. the beam width at a focal position thereof), of the at least one laser beam; or
- operating the focusing optical system of the laser processing apparatus for adjusting a focal position of the at least one laser beam; or
- operating the beam width regulation optical group of the laser processing apparatus for adjusting a beam width of the at least one laser beam and operating the beam width regulation optical group and the focusing optical group of the laser processing apparatus for adjusting a focal position of the at least one laser beam and a spot size corresponding to a beam width of the laser beam at said focal position.

According to the method, the beam width of the at least one laser beam may optionally be adjusted by the beam width regulation optical group while fulfilling at least one of the following:
- an absolute value of a beam propagation angle of the laser beam varies not more than 10°, possibly not more than 6°, more possibly not more than 3°; and
- a ratio of a distance from the beam width regulation optical system to focusing optical system along an optical path of the laser beam over a Rayleigh length of the laser beam measured downstream from the beam width regulation optical group, in particular downstream from the beam width regulation optical group and upstream from the focusing optical system, is not more than 1000, possibly not more than 60, possibly not more than 30, more not more than 10.

The method may comprise operating the beam width regulation optical group and the focusing optical group, possibly simultaneously and/or independently, for adjusting a focal position and a spot size of the laser beam. The beam width regulation optical group and the focusing optical group of the laser processing apparatus may be operated sequentially, one after the other, possibly within a reaction time shorter than 1 s, preferably shorter than 0.1 s, or simultaneously, for one same laser beam or for different laser beams.

The method may comprise operating the beam width regulation optical group of the laser processing apparatus for adjusting the beam width while keeping a collimation of the laser beam (B) substantially unchanged.

The beam width regulation optical group and the focusing optical group may be operated for varying the spot size (i.e. the beam width at a focal position) of the at least one laser beam while keeping constant the focal position of the at least one laser beam, thereby possibly compensating an uncontrolled variation of the focal position of the at least one laser beam triggered by the variation of the beam width, in particular of the spot size, of the at least one laser beam. Thus, adjusting the focal position of the at least one laser beam may comprise keeping constant said focal position after or during a variation of the corresponding beam width.

The beam width regulation optical group and the focusing optical group may be operated for varying the focal position of the at least one laser beam while keeping constant the spot size (i.e. the beam width at a focal position thereof) of the at least one laser beam, thereby possibly compensating an uncontrolled variation of the beam width, in particular of the spot size, triggered by the variation of the focal position of the at least one laser beam. Thus, adjusting the spot size of the at least one laser beam comprise keeping constant said beam width after or during a variation of the corresponding focal position.

In either case, an adjustment of the focal position of the at least one laser beam may be implemented by correspondingly adjusting the focal length of the optical system of the laser processing apparatus using the beam width regulation optical group and the focusing optical group. Notably, both the beam width regulation optical group and the focusing optical group may affect the spot size and the focal position of the at least one laser beam.

In preferred embodiments, the beam width regulation optical group and the focusing optical group of the laser processing apparatus may be operated for increasing or decreasing the beam width of the at least one laser beam by a factor of 2 or more, possibly 3 or more or even 4 or 5 or more. Thus a first beam width of a laser beam before being adjusted by the optical system of the laser processing apparatus and a second beam width of said laser beam after being adjusted by optical system may differ by a factor of 2, 3, 4, 5 or more, meaning that the second beam width may be at least twice the first beam width or at most half the first beam width, or at least three times the first beam width or at most a third of the first beam width, or at least four times or five times the first beam width or at most a fourth or a fifth of the first beam width, etc. This may in particular apply to the spot size: a first spot size of a laser beam before being adjusted by the laser processing apparatus and/or by the method according to the invention and a second spot size of said laser beam after being adjusted by the laser processing apparatus and/or by the method according to the invention may differ by a factor of 2, 3, 4, 5 or more, meaning that the second spot size may be at least twice the first spot size or at most half the first spot size, or at least three times the first spot size or at most a third of the first spot size, or at least four or five times the first spot size or at most a fourth or a fifth of the first spot size, etc. Possibly, such variations of the spot size may be performed while keeping constant the focal position of the at least one laser beam. Notably, as explained above, the spot size varies inversely to the second beam width: if the second beam width is increased with respect to the first beam width, the spot size is reduced and vice versa

According to preferred embodiments, the beam width regulation optical group and the focusing optical group may be operated, possibly controlled by a corresponding hardware-based or software-based control processing unit, for varying the beam width of the at least one laser beam, preferably in particular the spot size, while keeping constant a focal position of the at least one laser beam or for varying the focal position of the at least one laser beam while keeping constant the beam width, preferably in particular the spot size, thereof.

Optionally, the at least one laser beam may be a collimated laser beam when entering the laser processing apparatus through a corresponding laser input of the at least one laser input thereof. Additionally or alternatively, a beam shape and/or a beam intensity profile of the at least one laser beam may be adjusted before the at least one laser beam goes through the beam width regulation optical group and the focusing optical group.

Preferably, the at least one laser input may be free of any optical fiber coupling device and/or may hence be suitable for inputting a respective collimated laser beam with any beam shape and/or with any beam intensity profile.

The method may further comprise, in particular when the laser processing apparatus comprises the previously described configuration including at least one dichroic element, inputting a first laser beam into the laser processing apparatus through a first laser input thereof, inputting a second laser beam into the laser processing apparatus through a second laser input thereof, and outputting the first laser beam and the second laser beam through the laser output of the laser processing apparatus; and operating the beam width regulation optical group of the laser processing apparatus for adjusting a beam width of the first laser beam and/or of the second laser beam; and/or operating the beam width regulation optical group and the focusing optical group of the laser processing apparatus for adjusting a focal position of the first laser beam and/or of the second laser beam and a spot size of the first laser beam and/or of the second laser beam, corresponding to a beam width of the first and/or second laser beam at said focal position, respectively.

In this case, the beam width of the first laser beam and/or of the second laser beam may be adjusted by the beam width regulation optical group while fulfilling at least one of the following:
- an absolute value of a beam propagation angle of the respective laser beam varies not more than 10°, possibly not more than 6°, more possibly not more than 3°; and
- a ratio of a distance from the respective beam width regulation optical system to focusing optical system along an optical path of the respective laser beam over a Rayleigh length of the respective laser beam measured downstream from the beam width regulation optical group, in particular downstream from the beam width regulation optical group and upstream from the focusing optical system, is not more than 1000, possibly not more than 60, possibly not more than 30, possibly not more than 10.

Thus, these alternative or cumulative conditions may apply to either one or both of the first and second laser beams.

Preferably, the first laser beam and the second laser beam may fulfil at least one of the following conditions or a combination thereof, possibly referred specifically to the properties of the corresponding laser beam when being inputted into the laser processing apparatus or when reaching the beam width regulation optical group (does not apply to conditions referred to the spot size):
- the first laser beam and the second laser beam have different beam widths and/or different spot sizes;
- the first laser beam and the second laser beam have different wavelength ranges;
- the first laser beam and the second laser beam have different beam shapes;
- the first laser beam and the second laser beam have different intensity profiles;
- the first laser beam and/or the second laser beam is or comprises a single-mode laser beam, preferably obtained from a central fiber core of a coaxial optical fiber;
- the first laser beam and/or the second laser beam is or comprises a preferably ringshaped multi-mode laser beam, preferably obtained from a peripheral fiber-ring of a coaxial optical fiber.

The method may comprise operating the beam width regulation optical group and the focusing optical group of the laser processing apparatus for any of:
- adjusting a spot size of the first laser beam and/or of the second laser beam (B2);
- varying a spot size of the first laser beam while keeping constant a focal position of thereof;
- varying a spot size of the second laser beam while keeping constant a focal position of thereof;
- varying a focal position of the first laser beam while keeping constant a spot size of thereof; and
- varying a focal position of the second laser beam while keeping constant a spot size of thereof.

In the method of the invention, laser-processing the workpiece may comprise performing a laser powder bed fusion process or a laser welding process, in particular for welding battery cells and/or bipolar plates for combustible cells.

### BRIEF DESCRIPTION OF THE FIGURES

- Fig. 1: shows a schematic view of a laser processing apparatus according to some embodiments of the invention.
- Fig. 2: shows the laser processing of Fig. 1 after operating the beam width regulation optical group but without operating the focusing optical group.
- Fig. 3: shows a schematic isolated view of the optical components of the beam width regulation optical group and the focusing optical group, comparing the configurations of Figs. 1 and 2, when only the spot size of the laser beam is modified without adjusting the focal position thereof.
- Fig. 4: shows the laser processing of Fig. 1 after operating the beam width regulation optical group and the focusing optical group.
- Fig. 5: shows a schematic isolated view of the optical components of the beam width regulation optical group and the focusing optical group, comparing the configurations of Figs. 1 and 3, when both the spot size of the laser beam is modified and the focal position thereof is adjusted according to the present invention.
- Fig. 6: shows comparative schematic side views of the spot size of the laser beam deflected by a laser processing apparatus according to the invention. Fig. 6A corresponds to the corresponding shown in Fig. 1. Fig. 6B corresponds to the corresponding shown in Fig. 4.
- Fig. 7: shows comparative schematic top views of the spot size of the laser beam deflected by a laser processing apparatus according to the invention. Fig. 7A corresponds to the corresponding shown in Figs. 1 and 6A. Fig. 7B corresponds to the corresponding shown in Figs. 4 and 6B.
- Fig. 8: shows a schematic view of a laser processing apparatus according to some embodiments of the invention.
- Fig. 9: is a schematic flow diagram of a method according to embodiments of the invention.
- Fig. 10: is a schematic flow diagram of a method according to embodiments of the invention.
- Fig. 11: is a schematic flow diagram of a method according to embodiments of the invention.

### DESCRIPTION OF PREFERRED EMBODIMENTS OF THE INVENTION

For the purposes of promoting an understanding of the principles of the invention, reference will now be made to specific preferred embodiments illustrated in the drawings, and specific language will be used to describe the same. It will nevertheless be understood that no limitation of the scope of the invention is thereby intended, such alterations and further modifications in the illustrated apparatus and such further applications of the principles of the invention as illustrated therein being contemplated as would normally occur now or in the future to someone skilled in the art to which the invention relates within the scope defined by the claims.

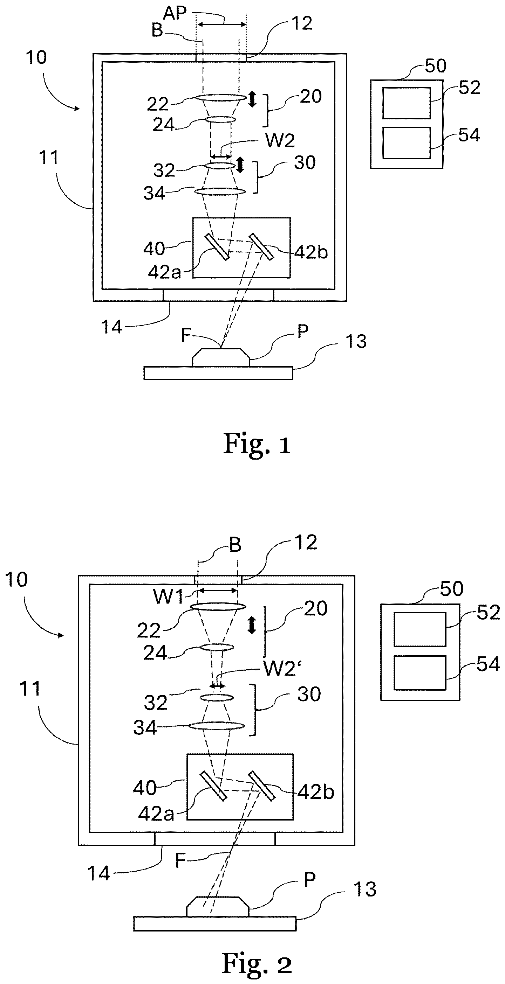

The same reference signs are used in Figs. 1-6 for indicating the same elements.

Fig. 1 shows a schematic view of a laser processing apparatus 10 according to some embodiments of the invention. The laser processing apparatus can be used for laser-processing a workpiece P arranged on a possibly planar work field 13, for example by performing a laser powder bed fusion process or a laser welding process, possibly for welding battery cells or bipolar plates for combustible cells.

The apparatus 10 comprises an optical system comprising a beam width regulation optical group 20 and a focusing optical group 30 and further comprising a scanning unit 40, wherein the beam width regulation optical group 20 the focusing optical group 30 and the scanning unit 40 are enclosed by a housing 11. Through the housing 11, which may be dust-tight and water-tight, a laser input 12, possibly configured as a first glass window, and a laser output 14, possibly configured as a second glass window, are formed. A laser beam B is inputted into the apparatus 10 through the laser input 12 and is outputted through the laser output 14. The laser beam B is directed towards a work field 13 by the scanning unit 40, where a workpiece P being laser-processed is arranged. The laser input can have an aperture AP of 5 mm to 50 mm.

When being inputted into the apparatus 10 through the laser input 12, the laser beam B has a given collimation. In the example of Fig. 1, the laser beam B is collimated when being inputted into the apparatus 10 through the laser input 12. In other related embodiments, the laser beam B can be slightly convergent or slightly divergent when being inputted into the apparatus 10 through the laser input 12. Further, when being inputted into the apparatus 10 through the laser input 12, the laser beam B has a given Rayleigh length, for example a Rayleigh length 1174.43 m for a collimated laser beam B with a wavelength 1070 nm and a beam waist (minimal beam width) 20 mm.

The beam width regulation optical group 20 and the focusing optical group 30 are configured for selectively adjusting the spot size of the laser beam B, i.e. the beam width of the laser beam corresponding to the focal position F, also called "focus diameter" and a focal position F of the laser beam B. The beam width regulation optical group 20 and the focusing optical group 30 can adjust the focal position F of the laser beam B to be or remain on a target location of the workpiece P or of the work field 13.

In the embodiment shown, the beam width regulation optical group 20 reduces the beam width from a first beam width W1, with which the laser beam B enters through the laser input 12, to a second beam width W2 at a position along the beam path of the laser beam between the groups 20 and 30, with W2 < W1. However, in other embodiments, W2 may be greater than W1. The beam width regulation optical group 20 can be operable for achieving a continuous range of values of W2 ≤ W1/2, W2 ≤ W1/3, W2 ≤ W1/4 or smaller, or for other configurations, values of W2 ≥ 2 W1, W2 ≥ 3 W1, W2 ≥ 4 W1 or greater.

In the embodiment shown, the beam width regulation optical group 20 comprises a movable lens 22 and a fixed lens 24. In related embodiments, the system 20 can comprise a larger number of movable and/or fix lenses. The position of the movable lens 22 can be adjusted to vary the second beam width W2 of the laser beam B, and consequently also the spot size of the laser beam. Notably the spot size varies inversely to the second beam width W2: if the second beam width W2 is increased with respect to the initial beam width W1, the spot size is reduced and vice versa. The operation of the beam width regulation optical group 20, in particular the movement of the movable lens 22, is controlled by a control processing unit 50. For this purpose, the control processing unit 50 can be operatively coupled to a motor system of the beam width regulation optical group 20 (not shown) and to a motor system of the focusing optical group 30 (not shown).

Downstream of the beam width regulation optical group 20 is the focusing optical group 30. In the embodiment shown, the focusing optical group 30 comprises a movable lens 32 and a fixed lens 34. In related embodiments, the focusing optical group 30 can comprise a larger number of movable and/or fix lenses. The movable lens 32 can be shifted to modify the effective focal length of the laser processing apparatus 10 and thereby contribute to adjusting the focal position F of the laser beam B, which is also influenced by the settings of the beam width regulation optical group 20. The operation of the focusing optical group 30, in particular the movement of the movable lens 32, is controlled by the control processing unit 50.

The W2 may correspond to the beam width of the laser beam B measured when the laser beam B is incident upon the lens 32 of the focusing optical group 30.

A distance between the beam width regulation optical group 20 and the focusing optical group 30 corresponds in this exemplary embodiment to a distance between the lenses 24 and 32, which can for example be in the range 25 mm to1000 mm, for example 75 mm to 750 mm, including a preferred range 500 mm to 750 mm.

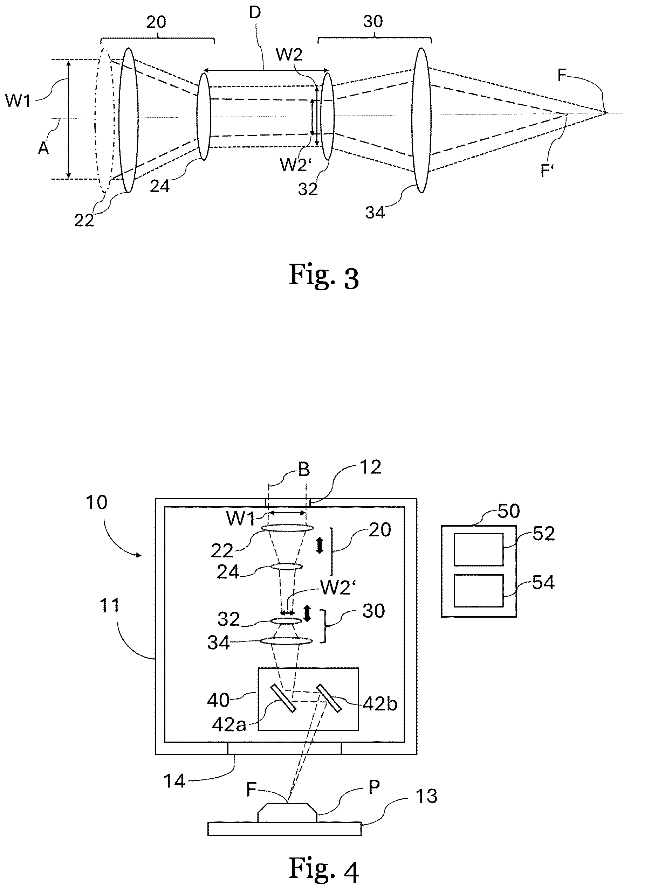

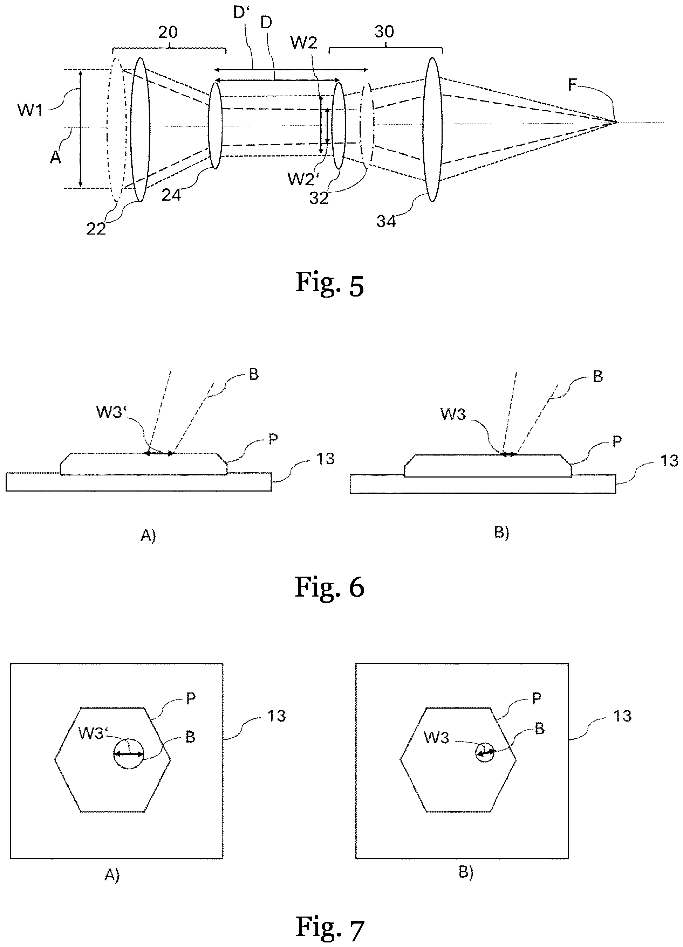

The beam width regulation optical group 20 can be configured for adjusting the beam width W of the laser beam W while fulfilling at least one of the following conditions:
- A beam propagation angle of the laser beam B does not vary more than 10°: Since the laser beam B reaches the lens 22 being collimated, this implies, in the exemplary embodiment under consideration, that the laser beam B, between the lenses 24 and 32, after passing the beam width regulation optical group 20, remains convergent or is at most slightly divergent, with a divergence angle not greater than 10° or slightly convergent, with a convergence angle not greater than 10°.
- A ratio of a distance (see distance D in Fig. 3 and 5) from the beam width regulation optical system 20 to the focusing optical system 30 along the optical path of the laser beam over the Rayleigh length of the laser beam measured downstream from the beam width regulation optical group 20 and upstream from the focusing optical system 30, is not more than 1000, possibly not more than 60: In the present case, if the distance between the beam width regulation optical system 20 and the focusing optical system 30, i.e. between lenses 24 and 32, is, for example, 75 mm, the Rayleigh length of the laser beam B downstream from the beam width regulation optical group 20 is at least 0,075 mm, preferably at least 1,25 mm, possibly at least 2,5 mm or at least 7,5 mm.

The scanning unit 40 comprises a pair of XY movable mirrors 42a and 42b with corresponding galvanometers (not shown) for controllably scanning the laser beam B across the work field 13 W in two dimensions. The scanning unit 40 is positioned along the beam path downstream from both the beam width regulation optical group 20 and the focusing optical group 30. The movable mirrors 42a and 42b, which can be controlled by the control processing unit 50, are used to direct the laser beam B to the desired location on the workpiece P.

In the embodiment shown, the control processing unit 50 includes a first control module 52 and a second control module 54. The first control module 52 can control the movement of the movable lens 22 in the beam width regulation optical group 20 and the movable lens 32 in the focusing optical group 30 for varying the spot size of the laser beam B while maintaining the focal position F constant, for example on the work field 13 or on the workpiece P or for varying of the focal position F while maintaining the spot size of the laser beam constant, for example at a target value of 60 µm.

The second control module 54 can control the movement of the movable lens 22 in the beam width regulation optical group 20 to adjust the beam width of the laser beam at a position along its beam path, between the groups 20 and 30, to correspond to a target value associated with the focusing optical group 30, in particular with the movable lens 32 thereof. Said target value can for example be a maximal beam width compatible with the focusing optical group 30 or with a current setting thereof. For example, if the focusing optical group 30 is suitable for receiving the laser beam B having maximal beam width of 20 mm, the second control module 54 can control the movement of the movable lens 22 such that the beam width W2 of the laser beam B does not exceed said maximum value.

In operation, the laser beam B enters the laser processing apparatus 10 through the laser input 12. The beam width regulation optical group 20 and the focusing optical group 30 can adjust the spot size of the laser beam B, i.e. its beam width at the focal position F and readjust the focal position F of the laser beam B, in particular to keep it constant, to keep it on the work field 13 or to keep it on the workpiece P. The scanning unit 40 directs the laser beam B onto the workpiece P, allowing for precise laser processing.

Fig. 2 shows a schematic view of the laser processing apparatus 10 of Fig. 1, wherein, as compared to Fig. 1, the movable lens 22 has been moved, in this exemplary case up. As a consequence, as compared to the configuration shown in Fig. 1, the beam width W2' downstream from the beam width regulation optical group 20 and upstream from the focusing optical group 30 is reduced, i.e. W2'<W2. Consequently, the spot size, i.e. the beam width at the focal position F of the laser beam, will also be larger in the configuration of Fig. 2 than in the configuration of Fig. 1.

If the focusing optical group 30 is not operated, the variation of the position of the movable lens 22 of the beam width regulation optical group 20 results in a reduced effective focal length of the entire optical system. As a consequence, the focal position F of the laser beam B varies with respect to Fig. 1 and is now upstream from the workpiece P. Consequently, the laser beam B is defocused on the workpiece P.

Fig. 3 illustrates the optical consequences upon the focal position of adjusting the beam width in Fig. 2. Fig. 3 shows a schematic dedicated view of the optical components of the beam width regulation optical group 20 and the focusing optical group 30 of Fig. 1 and 2, wherein, as compared to Figs. 1 and 2, the systems are arranged horizontally, with the laser beam B being transmitted from left to right, rather than vertically, for explanatory purposes. The optical axis is indicated with an A. The positions of the lenses 22, 24, 32 and 34 corresponding to the situation in Fig. 1 are shown with solid lines, whereas the positions of the lens 22 corresponding to the situation in Fig. 2 is shown with broken lines. Likewise, the laser beam is represented with different types of dash lines for the optical configuration of the lens 22 shown in solid lines and for the configuration shown in broken lines. The distance between lenses 24 and 32 is indicated as D.

Before being modified by the lens 22 and 24 of the beam width regulation optical group 20, the beam width of the laser beam corresponds to a value W1 and the laser beam is collimated. The beam width regulation optical group 20 then modifies the beam width to a different value W2 or W2', depending on the position of the movable lens 22, wherein W2' < W2, and the laser beam can be slightly convergent between lenses 24 and 32.

In the configurations in which the lenses are represented in solid lines, corresponding to Fig.1, the focusing optical group 30 focuses the laser beam on the focal position F, which can correspond to a target position on the work field 13 or on the workpiece P. Once the movable lens 22 is moved from the position represented in solid line to the position represented in broken line, corresponding to Fig. 2, and in absence of any compensating movement of the movable lens 32 of the focusing optical group 30, the focal position of the laser beam is displaced from the position indicated with F to the position indicated with F', and the laser beam is no longer focused on the previous target position corresponding to the work field 13 or the workpiece P. This can be avoided, according to the invention, by a corresponding coordinated movement of the movable lens 32 of the focusing optical group 30, as illustrated in Figs. 4 and 5.

Fig. 4 shows a schematic view of the laser processing apparatus 10 of Fig. 1, wherein, as compared to Fig. 1, the movable lens 22 has been moved up and the movable lens 32 has been moved down. As a consequence, as compared to the configuration shown in Fig. 1, the beam width W2' downstream from the beam width regulation optical group 20 and upstream from the focusing optical group 30 (possibly measured when the laser beam B is incident upon the lens 32) is reduced and is now slightly convergent, i.e. W2'<W2. Consequently, the spot size, i.e. the beam width at the focal position F of the laser beam, will be larger in the configuration of Fig. 4 than in the configuration of Fig. 1. However, thanks the focusing optical group 30 being operated in coordination with the beam width regulation optical group 20, the variation of the effective focal length of the entire optical system caused by the change in position of the movable lens 22 of the beam width regulation optical group 20 is compensated by a corresponding variation of the effective focal length of the entire optical system caused the variation of the position of the movable lens 32 of the focusing optical group 30, such that, overall, the focal position F of the laser beam B remains constant with respect to Fig. 1. Consequently, the laser beam B stays focused on the workpiece P, despite the variation of the spot size.

Fig. 5 shows a schematic dedicated view of the optical components of the beam width regulation optical group 20 and the focusing optical group 30 of Figs. 1 and 4, wherein, as compared to Figs. 1 and 4, the systems are arranged horizontally, with the laser beam B being transmitted from left to right, rather than vertically, for explanatory purposes, like in Fig. 3. The optical axis is indicated with an A. The positions of the lenses 22, 24, 32 and 34 corresponding to the situation in Fig. 1 are shown with solid lines, whereas the positions of the lenses 22 and 32 corresponding to the situation in Fig. 4 is shown with broken lines. Likewise, the laser beam is represented with different types of dash lines for the optical configuration of the lenses 22 and 32 shown in solid lines and for the configuration shown in broken lines. The distance between lenses 24 and 32 is indicated as D.

Before being modified by the lenses 22 and 24 of the beam width regulation optical group 20, the beam width of the laser beam corresponds to a value W1 and the laser beam is collimated. The beam width regulation optical group 20 then modifies the beam width to a different value W2 or W2', depending on the position of the movable lens 22, wherein W2' < W2 and wherein W2' can be the same W2' shown in Figs. 2 and 3, and the laser beam B is slightly convergent between 24 and 32. For example, a convergence angle of the laser beam B with beam width W2' after passing through the group 20 can be 10° or less.

In the configurations in which the lenses are represented in solid lines, corresponding to Fig. 1, the focusing optical group 30 focuses the laser beam on the focal position F, which can correspond to a target position on the work field 13 or on the workpiece P. If the movable lens 22 is moved from the position represented in solid line to the position represented in broken line and the movable lens 32 of the focusing optical group 30 is moved from the position represented in solid line to the position represented in broken line, corresponding to Fig. 4, the focal position F of the laser beam remains constant.

In Figs. 1, 2 and 4, the variation of the beam width implemented by the beam width regulation optical group 20 is only indicated at a position between both groups 20 and 30. However, there is also a corresponding variation of the spot size at the focal position F, which is illustrated in detail in Fig. 6. Fig. 6 compares the spot size W3 corresponding to the configuration in Fig. 1 to the spot size W3' corresponding to the configuration in Fig. 4, wherein W3' > W3. In real (non-ideal) conditions, a laser beam does not have a point-like focus, but instead a given beam width at its focal position, i.e. a "spot size" or "focus diameter". Any variation of the beam width implemented by the laser processing apparatus 10 is associated with a corresponding variation of the spot size. The beam width regulation optical group 20 can hence be used to increase or decrease the spot size W3. In the example illustrated by Figs. 1 and 4, the spot size is increased from W3 to W3'. In related embodiments, the spot size can be increased, for example, to twice its original size or to three times its original size. However, in other related embodiments, the spot size can be decreased, for example to half its original size or to a third of its original size.

Fig. 6 illustrates the effect of the variation of the beam width of the laser beam B implemented by the laser processing apparatus 10 of Figs. 1 and 4, in particular by the beam width regulation optical group 20 and the focusing optical group 30 thereof. Fig. 6A shows a schematic side zoomed-in view of the work field 13 of the laser processing apparatus 10 of Fig 4, indicating as W3' the spot size, i.e. the beam width of the laser beam B at its focus, which coincides with an upper surface of the workpiece P. Fig. 6B shows a schematic side zoomed-in view of the work field 13 of the laser processing apparatus 10 of Fig 1, indicating as W3 the spot size, i.e. the beam width of the laser beam B at its focus, which again coincides with an upper surface of the workpiece P, despite having in this case a greater value W3'>W3. In other cases, it is possible to implement W3'<W3.

Fig. 7 provides schematic top view of the work fields 13 of Fig. 6, showing, for the sake of exemplary illustration and without limitation, a workpiece P with hexagonal profile arranged on the work field 13 and being laser-processes by the laser beam B. The laser beam 13 is focused on an upper surface of the workpiece P. In Fig. 7A, corresponding to Fig. 4 and 6A, the spot size or focus diameter is W3' and in Fig. 7B, corresponding to Fig. 1 and 6B, the spot size or focus diameter is W3.

The combination of the beam width regulation optical group 20 and the focusing optical group 30 allows rapid and precise control over both the beam width and the focal position of the laser beam, facilitating accurate laser processing.

Figs. 1-7 exemplarily illustrate the case in which the beam width regulation optical group 20 is used for reducing the beam width, W2 < W1, i.e. for increasing the spot size, W3'>W3. However, the beam width regulation optical group 20 can be used to obtain a laser beam B with greater beam width (W2 > W1. For other uses, the beam width regulation optical group 20 can be used to obtain a laser beam B with smaller beam width (W2 < W1), for example for a more accurate and localised laser-processing. In any case, irrespectively of whether the beam width or the spot size are increased or decreased, the laser processing apparatus 10 of the invention allows keeping the focal position F of the laser beam B constant when modifying the spot size and/or keeping the spot size constant when modifying the focal position F. A minimal spot size W3 achievable by the laser processing apparatus 10 of the invention for a given focal position F may be determined by the focusing optical group 30, which may be configured for receiving a given maximal beam width W2.

The skilled person knows how to choose the optical properties of the lenses of the optical groups 20 and 30. For example, for a beam width W1 of the laser beam B of 4 mm, if the movable lens 22 is a convex lens with effective focal length +300 mm and the fixed lens 24 is a concave lens with effective focal length -250 mm, with a distance between the lenses 22 and 24 of 50 mm, a distance between the lenses 24 and 32 of 25 mm, and the focusing optical group 30 configured to implement an effective focal length of 60 mm, the transition from the configuration represented in solid lines to the configuration represented in broken lines in Fig. 5 requires moving the lens 22 upwards by 100 mm and increasing the focal length of the focusing optical group 60 to 66,7 mm.

The control processing unit 50 can also control the laser beam B inputted into the laser processing apparatus. For example, the control processing unit 50 can be configured to adapt a laser power of the laser beam B as a function of beam width. If, for example, the beam width regulation optical group 20 is configured for increasing the beam width, W2 > W1, and consequently decreasing the spot size, the control processing unit 50 can correspondingly increase the laser power of the laser beam B, such that the laser power density remains constant despite the increase in beam width. Likewise, if the beam width regulation optical group 20 is configured for decreasing the beam width, W2 < W1, and consequently increasing the spot size, the control processing unit 50 can correspondingly decrease the laser power of the laser beam B, such that the laser power density remains constant despite the decrease in beam width.

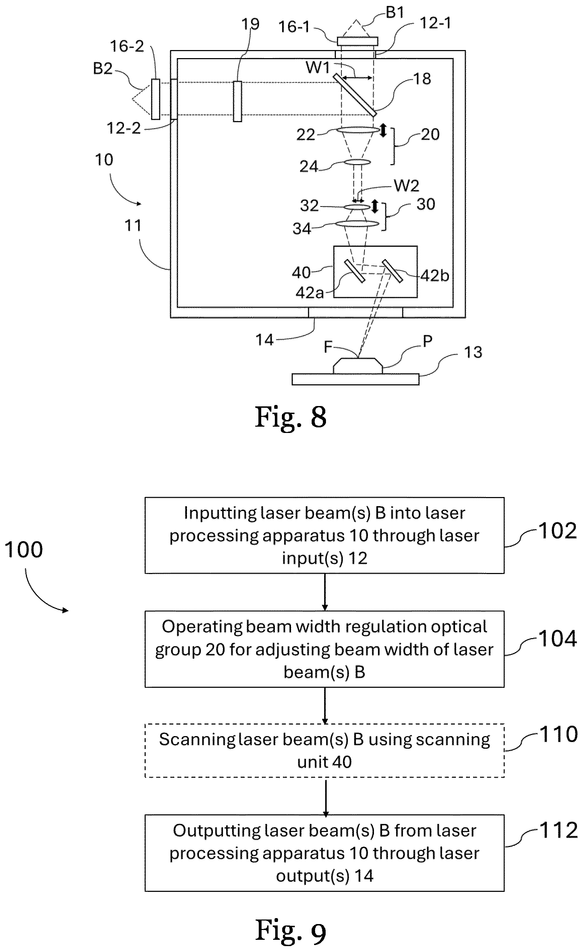

Fig. 8 shows a schematic view of a laser processing apparatus 1 according to some embodiments of the invention. In this case, the laser processing apparatus comprises two laser inputs 12-1 and 12-2, each used for inputting a corresponding laser beam B1 and B2. The first laser beam B1 is collimated by an optional first collimation optical system 16-1, possibly corresponding to a collimation lens, and the second laser beam B2 is collimated by an optional second collimation optical system 16-2, possibly corresponding to a collimation lens. Either or both of the optional collimation optical systems 16-1 and 16-2 may be omitted, for example if the respective laser beam does not need collimation for being collimated when entering the laser processing apparatus.

The first laser beam B1 and the second laser beam B2 are both directed towards the beam width regulation optical group, overlapping partly along the same optical path, by a dichroic element 18, arranged within the housing 11, which is transmissive for the first optical beam B1 and is reflective for the second optical beam. The beam width regulation optical group 20, the focusing optical group 30 and the scanning unit 40 are operable as described above for the exemplary embodiments of Figs. 1-7.

In this exemplary embodiment, the laser processing apparatus 10 further comprises an optional beam adjusting element 19, which can be or comprise a diffractive optical element, for adjusting a beam shape and/or a beam intensity profile of the second laser beam B2. For example, the beam adjusting element 19 may result in the laser beam B2 being transmitted downstream to the beam width regulation optical group 20 having a circular cross-section and a gaussian beam intensity profile. In other related embodiments, an optional second a beam adjusting element could be arranged in the beam path of the first laser beam B1, in particular upstream from the dichroic element 18, for adjusting a beam shape and/or a beam intensity profile of the first laser beam B1.

Fig. 8, no processing control unit is shown, but it can be present for controlling the beam width regulation optical group 20, the focusing optical group 30 and the scanning unit 40.

In the configuration illustrated in Fig. 8, the beam width regulation optical group 20 can be configured for adjusting the beam width of either one or both of the first and second laser beams B1, B2 while fulfilling at least one of the following conditions:
- A beam propagation angle of the laser beam B1 and/or B2 does not vary more than 10°.
- A ratio of a distance (see distance D in Fig. 3 and 5) from the beam width regulation optical system 20 to the focusing optical system 30 along the optical path of the laser beam B1 or B2 over the Rayleigh length of the laser beam B1 or B2 measured downstream from the beam width regulation optical group 20, in particular downstream from the beam width regulation optical group 20 and upstream from the focusing optical group 30, is not more than 1000, possibly not more than 60.

In the configuration illustrated in Fig. 8, the first laser beam B1 and the second laser beam B2 can have one or more of different beam widths, different wavelength ranges, different beam shapes and different intensity profiles. For example, the first laser beam B1 may correspond to a laser beam having a circular cross-section with a Gaussian intensity profile and a beam width of 20 mm in a first wavelength range of 1030 nm to 1090 nm, while the second laser beam B2 may have a top-hat cross-section possibly induced by the optional beam adjusting element 19, with an Gaussian intensity profile and a beam width of 15 mm in a second wavelength range of 515 nm to 540 nm. If required by the respective wavelength, the first laser input 12-1 and/or the second laser input 12-2 can comprise an additional focusing optical group comprising at least one movable lens.

The first laser beam B1 and the second laser beam B2, in this and other examples, may be used for laser-processing different regions of the work field or the workpiece sequentially or simultaneously, and may also be used for laser-processing one same region of the work field or the workpiece sequentially or simultaneously.

For example, if the second laser beam B2 has a greater beam width than the first laser beam B1, it can achieve, for a given scanning speed, a desired melting in reduced time, as compared to the first beam B1. The second laser beam B2 can be used with a greater spot size so as to contribute to obtaining an homogeneous melting pool with reduced formation of welding sparks and avoiding formation of a so-called keyhole and so-called balling effects. Meanwhile, the first laser beam B1, can be set to have smaller spot size and can be used for laser-processing frontier regions between different segments of the workpiece and for laser-processing the outer contour of the workpiece P with greater laser precision.

The advantageous role of the laser processing apparatus 10 according to the present invention is particularly manifest when laser beams with a given intensity profile and/or beam shape are used. If the spot size of a laser beam is increased and a corresponding defocussing of the laser beam is not compensated, the intensity profile of said laser beam can be distorted or lost and instead, a laser spot with undefined intensity profile would have to be used for laser-processing. This can be advantageously prevented by the laser processing apparatus 10 according to the present invention thanks to the coordination between the beam width regulation optical group 20 and the focusing optical group 30.

Figs. 9, 10 and 11 show a schematic flow diagrams of respective methods according to embodiments of the invention, which may be implemented by the control processing unit 50 of the laser processing apparatus of the invention or by any other generic processing unit functionally coupled to a laser processing apparatus 10 according to the present invention or integrated therein.

The method 100 can be performed for laser-processing a workpiece, for example in a laser powder bed fusion process or a laser welding process, in particular for welding battery cells and/or bipolar plates for combustible cells.

The method 100 comprises a process 102 of inputting at least one laser beam B into the laser processing apparatus 10 through at least one laser input 12 thereof. In the previously seen exemplary embodiments of Figs. 1-7, one laser beam B is inputted into the laser processing apparatus 10 through a corresponding laser input 12. In the previously seen exemplary embodiment of Fig. 8, a first laser beam B1 and a second laser beam B2 are inputted into the laser processing apparatus 10 through respective laser inputs 12-1 and 12-2. A number of laser beams greater than two can also be inputted into the laser processing apparatus.

The laser beam(s) inputted into the laser processing apparatus 10 are preferably collimated or can be collimated before entering the laser processing apparatus or after entering the laser processing apparatus, preferably before passing the beam width regulation optical group 20 and the focusing optical group 30, by corresponding collimation optical systems.

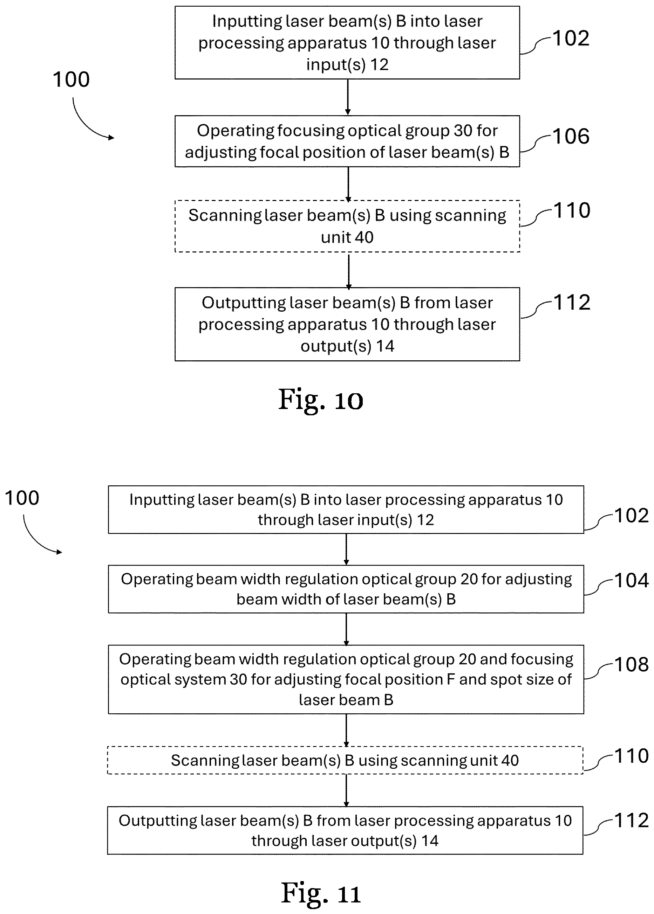

The method 100 can further comprise, as shown in Figs. 9 and 11, a process 104 of operating the beam width regulation optical group 20 of the laser processing apparatus 10 for adjusting a beam width of the at least one laser beam B. Adjusting the beam width (or the spot size if process 106 is not carried out, i.e. if the focusing optical group 30 is not operated) of the laser beam(s) can comprise increasing the beam width (or spot size), for example by a factor 2, 3, 4, 5 or more, or decreasing the beam width (or spot size), for example by a factor 2, 3, 4, 5 or more, depending on the desired laser application.

The method 100 can further comprise, as shown in Fig. 10, a process 106 of operating the focusing optical group 30 of the laser processing apparatus 10 for adjusting a focal position of the at least one laser beam B, in particular if process 104 is not carried out, i.e., if the beam width regulation optical group 20 is not operated.

The method 100 can further comprise, as shown in Fig. 11, process 104 of Fig. 9 and a process 108 of operating the beam width regulation optical group 20 and the focusing optical group 30 of the laser processing apparatus 10 for adjusting a focal position and a spot size of the at least one laser beam B.

Processes 104 and 108 can be performed sequentially or simultaneously. Process 104 can be present without processes 106 and 108 (see Fig. 9), process 106 can be present without processes 104 and 108 (see Fig. 10) or both processes 104 and 108 can be present (see Fig. 11). Processes 104 and 106 can be performed simultaneously or sequentially for adjusting the spot size and the focal position of the laser beam(s) by the combined action of the beam width regulation optical group 20 and the focusing optical group 30. For example, processes 104 and 106 can be performed for varying the spot size while keeping constant the focal position F thereof, or for adjusting the focal position F of the laser beams B while keeping constant the spot size thereof.

The method 100 further comprises a process 112 of outputting the laser beam(s) through the laser output 14 of the laser processing apparatus 10. The laser beam(s) can then be used for laser-processing a workpiece P.

Preferably, the method can comprise an optional process 110 of scanning the laser beam(s) using a scanning unit 40 of the laser processing apparatus for controllably directing the laser beam(s) to one or more target locations of the workpiece being laser-processes or of the work field.

When more than one laser beams B1, B2 are inputted into the laser processing apparatus through respective laser inputs 12-1, 12-2, adjusted in beam width by the beam width regulation optical group 20, adjusted in focal position F by the focusing optical group 30 and outputted through the laser output 14, and then used for laser-processing, the different laser beams B1, B2 can have different beam widths, different wavelength ranges, different beam shapes and different intensity profiles.

Although preferred exemplary embodiments are shown and specified in detail in the drawings and the preceding specification, these should be viewed as purely exemplary and not as limiting the invention. It is noted in this regard that only the preferred exemplary embodiments are shown and specified, and all variations and modifications should be protected that presently or in the future lie within the scope of protection of the invention as defined in the claims.

## Claims

1. A laser processing apparatus (10) comprising:
a laser input (12) for receiving a laser beam (B) and a laser output (14) for outputting the laser beam (B);
an optical system for the laser beam between the laser input (12) and the laser output (14) comprising:
a beam width regulation optical group (20) for adjusting a beam width of the laser beam (B), wherein the beam width regulation optical group (20) comprises at least two lenses (22, 24) comprising at least one movable lens (22) for adjusting a beam width of the laser beam (B); and
a focusing optical group (30) with adjustable focal length, wherein the focusing optical group (30) is arranged along a beam path of the laser beam (B) between the beam width regulation optical group (20) and the laser output (14) and comprises at least two lenses (32, 34) comprising at least one movable lens (32);
wherein the optical system is configured for adjusting a focal position of the laser beam and a spot size corresponding to a beam width of the laser beam at said focal position (F); and
wherein the beam width regulation optical group (20) is configured for at least one of:
- causing a variation of an absolute value of a beam propagation angle of the laser beam (B) not more than 10°; and
- such that a ratio of a distance from the beam width regulation optical system (20) to the focusing optical system (30) along an optical path of the laser beam (B) over a Rayleigh length of the laser beam (B) measured downstream from the beam width regulation optical group (20) is not more than 1000.

2. The laser processing apparatus (10) of claim 1, further comprising a first control module (52) for controlling a movement of the last least one movable lens of the beam width regulation optical group (20) and a movement of the at least one movable lens of the focusing optical group (30) for varying the spot size of the laser beam (B) while keeping constant the focal position (F) of the laser beam (B).

3. The laser processing apparatus (10) of claim 1 or 2, further comprising a second control module (52) for controlling a movement of the last least one movable lens of the beam width regulation optical group (20) and a movement of the at least one movable lens of the focusing optical group (30) for varying the focal position (F) of the laser beam (B) while keeping constant the spot size of the laser beam (B).

4. The laser processing apparatus (10) of any of the preceding claims, further comprising a third control module (54) for controlling a movement of the last least one movable lens of the beam width regulation optical group (20) for adjusting the beam width of the laser beam (B) to correspond to a target value associated to the focusing optical group (30).

5. The laser processing apparatus (10) of any of the preceding claims, further comprising a scanning unit (40) for scanning the laser beam (B) across a work field (13) in two dimensions, wherein the scanning unit (40) is arranged along the beam path of the laser beam (B) downstream from the beam width regulation optical group (20) and the focusing optical group (30).

6. The laser processing apparatus (10) of any of the preceding claims, further comprising at least one collimation optical system (16) for collimating the laser beam (B) upstream from the beam width regulation optical group (20).

7. The laser processing apparatus (10) of any of the preceding claims, further comprising at least one beam adjusting element (19), preferably at least one diffractive optical element, for adjusting a beam shape and/or a beam intensity profile of the laser beam (B) upstream from the beam width regulation optical group (20).

8. The laser processing apparatus (10) of any of the preceding claims, further comprising at least one dichroic element (18) arranged upstream of the beam width regulation optical group (20), wherein the at least one dichroic element (18) is at least partly transparent for a first laser beam (B1) inputted into the laser processing apparatus (10) through a first laser input (12-1) and outputted of the laser processing apparatus (10) through the laser output (14) and is at least partly reflective for a second laser beam (B2) inputted into the laser processing apparatus (10) through a second laser input (12) and outputted of the laser processing apparatus (10) through the laser output (14).

9. The laser processing apparatus (10) of any of the preceding claims, wherein the laser input (12) is configured for inputting a collimated laser beam.

10. A method of operating a laser processing apparatus (10) according to any of the preceding claims for laser-processing a workpiece (P), the method comprising:
inputting at least one laser beam (B) into the laser processing apparatus (10) through at least one laser input (12) thereof;
operating the beam width regulation optical group (20) of the laser processing apparatus (10) for adjusting a beam width of the at least one laser beam (B),; or
operating the focusing optical system (30) of the laser processing apparatus (10) for adjusting a focal position (F) of the at least one laser beam (B); or
operating the beam width regulation optical group (20) of the laser processing apparatus (10) for adjusting a beam width of the at least one laser beam (B) and operating the beam width regulation optical group (20) and the focusing optical system (30) of the laser processing apparatus (10) for adjusting a focal position (F) of the at least one laser beam (B) and a spot size corresponding to a beam width (W) of the laser beam (B) at said focal position (F); and
outputting the at least one laser beam (B) through a laser output (14) of the laser processing apparatus (10);
wherein the beam width of the at least one laser beam (B) is adjusted by the beam width regulation optical group (20) while fulfilling at least one of the following:
- an absolute value of a beam propagation angle of the laser beam (B) varies not more than 10°;
- a ratio of a distance from the beam width regulation optical system to focusing optical system along an optical path of the laser beam over a Rayleigh length of the laser beam measured downstream from the beam width regulation optical group is not more than 1000.

11. The method of claim 10, wherein the beam width regulation optical group (20) and the focusing optical group (30) of the laser processing apparatus (10) are operated for increasing or decreasing the spot size of the at least one laser beam (B) by a factor of 2 or more, possibly 3, 4 or 5 or more.

12. The method of claim 10 or 11, wherein the beam width regulation optical group (20) and the focusing optical group (30) are operated for varying the beam width (W), preferably the spot size, of the at least one laser beam (B) while keeping constant a focal position (F) of the at least one laser beam (B) or for varying the focal position (F) of the at least one laser beam (B) while keeping constant the beam width, preferably the spot size, of the at least one laser beam (B).

13. The method of any of claims 10 to 12, wherein the at least one laser beam (B) is a collimated laser beam (B) when entering the laser processing apparatus (10) through the at least one laser input (12) thereof; and/or
wherein the workpiece (P) is laser-processed in a laser powder bed fusion process or a laser welding process, in particular for welding battery cells and/or bipolar plates for combustible cells.

14. The method of any of claims 10 to 13, wherein the laser processing apparatus (10) is preferably according to claim 8 and the method further comprises:
inputting a first laser beam (B1) into the laser processing apparatus (10) through a first laser input (12-1) thereof, inputting a second laser beam (B2) into the laser processing apparatus (10) through a second laser input (12-2) thereof;
operating the beam width regulation optical group (20) of the laser processing apparatus (10) for adjusting a beam width of the first laser beam (B1) and/or of the second laser beam (B2); or
operating the focusing optical system (30) of the laser processing apparatus (10) for adjusting a focal position (F) of the first laser beam (B1) and/or of the second laser beam (B2); or
operating the beam width regulation optical group (20) of the laser processing apparatus (10) for adjusting a beam width of the first laser beam (B1) and/or of the second laser beam (B2) and operating the beam width regulation optical group (20) and the focusing optical system (30) of the laser processing apparatus (10) for adjusting a focal position (F) of the first laser beam (B1) and/or of the second laser beam (B2) and a spot size of the first laser beam (B1) and/or of the second laser beam (B2), corresponding to a beam width (W) of the first and/or second laser beam (B) at said focal position (F), respectively; and
outputting the first laser beam (B1) and the second laser beam (B2) through the laser output (14) of the laser processing apparatus (10);
wherein the first laser beam (B1) and the second laser beam (B2) preferably fulfil at least one of the following conditions:
- the first laser beam (B1) and the second laser beam (B2) have different beam widths and/or different spot sizes;
- the first laser beam (B1) and the second laser beam (B2) have different wavelength ranges;
- the first laser beam (B1) and the second laser beam (B2) have different beam shapes;
- the first laser beam (B1) and the second laser beam (B2) have different beam intensity profiles.

15. The method of any of claims 10 to 14, comprising operating the beam width regulation optical group (20) and the focusing optical group (30) of the laser processing apparatus (10) for any of:
- adjusting a spot size of the first laser beam (B1) and/or of the second laser beam (B2);
- varying a spot size of the first laser beam (B1) while keeping constant a focal position of thereof;
- varying a spot size of the second laser beam (B2) while keeping constant a focal position of thereof;
- varying a focal position of the first laser beam (B1) while keeping constant a spot size of thereof; and
- varying a focal position of the second laser beam (B2) while keeping constant a spot size of thereof.
